# EUROPEAN PATENT SPECIFICATION

(11) **EP 1 367 374 B1**
(45) Date of publication and mention of the grant of the patent: **24.03.2010**
(21) Application number: 03003260.1
(22) Date of filing: 24.02.2003
(51) Int. Cl.: G01M 1/02, G01M 1/06, G01M 1/22

(54) **Balancing machine for rotating bodies**
Auswuchtmaschine für rotierende Körper
Machine d'équilibrage de corps rotatifs

(30) Priority: 14.05.2002 IT MI20021027
(43) Date of publication of application: 03.12.2003
(73) Proprietor: Buzzi, Carlo, 23826 Mandello del Lario (Lecco) (IT)
(72) Inventor: Buzzi, Carlo, 23826 Mandello del Lario (Lecco) (IT)
(74) Representative: Modiano, Micaela Nadia

(56) References cited:
- EP-A- 0 743 511
- EP-A- 0 766 078
- EP-A- 0 836 086
- DE-A- 4 037 745
- US-A- 3 785 211
- US-A- 3 812 725

## Description

The present invention relates to a balancing machine for rotating bodies in general and for motor vehicle wheels in particular.

As is known, in balancing machines the rotating body, and particularly the wheel, is mounted on one end of a shaft, which is turned while being supported by a chassis provided with force transducers, which measure the centrifugal force generated by the imbalances present on the rotating body.

EP-A-836 086 discloses a balancing machine corresponding to the preamble of claims 1 and 5.

In order to turn the rotating body at the speed required for the measurement, electric motors connected to the shaft by means of belts and pulleys or a motor mounted on the same axis as the rotating body are currently used.

The first known solution, shown for example in US 4,445,372 suffers the drawback that it is mechanically very complicated and generates, due to the presence of the belt, several interfering forces, which make it difficult to measure precisely the imbalance force; on the other hand, the mechanical reduction that can be obtained with belts allows to use standard motors having normal speed and torque characteristics to accelerate the rotating body to approximately 100-200 rpm, as normally required.

Another known solution, disclosed for example in US 4,423,632 and illustrated in the accompanying Figure 1, uses a normal asynchronous motor 1, which is deenergized after reaching only a fraction of the nominal speed.

The rotating body, designated by the reference numeral 2, is supported on the rotating shaft 3, which in turn is supported in a cantilevered fashion by the motor 1, connected to a supporting chassis 4 by interposing measurement transducers 5, which in practice connect the frame of the motor to the chassis 4.

Deenergizing the motor after reaching only a fraction of the nominal speed causes considerable electrical absorption, on the order of a few tens of amperes, and accordingly causes an intense heating of the motor, thereby requiring expensive servoventilation devices.

The considerable heat to be dissipated inevitably causes heating of the chassis whereto the motor is connected, with consequent thermal expansion, which may cause, in known solutions, the presence of static forces on the measurement transducers 5, with consequent malfunction thereof.

The aim of the invention is to eliminate the drawbacks noted above, by providing a balancing machine for rotating bodies in general and for motor vehicle wheels in particular that is not subject to the limitations and drawbacks typical of known solutions.

Within this aim, an object of the invention is to provide a balancing machine that has no possible malfunctions arising from the presence of the belts or from the heating effect of the motor and also has no constructive complications for the corresponding mechanical elements.

Another object of the present invention is to provide a balancing machine that thanks to its particular constructive characteristics is capable of giving the greatest assurances of reliability and safety in use.

Another object of the present invention is to provide a balancing machine that can be obtained easily starting from commonly commercially available elements and materials and is also competitive from a merely economical standpoint.

This aim and these and other objects that will become better apparent hereinafter are achieved by a balancing machine for rotating bodies in general and for motor vehicle wheels in particular, according to the invention, which comprises a rotating shaft supported rotatably by a supporting element that is connected to the structure of the balancing machine by means of laminas and two tension members which are substantially perpendicular to each other, at the end whereof measurement transducers are arranged, an electric motor being further provided for the actuation of said rotating shaft, the rotor of said motor being keyed on said rotating shaft, characterized in that it comprises bearings for supporting said rotating shaft which are arranged at said supporting element and are external with respect to said rotor, the stator of said electric motor being monolithically connected to said supporting element.

Further characteristics and advantages of the invention will become better apparent from the description of two preferred but not exclusive embodiments thereof, illustrated only by way of non-limitative example in the accompanying drawings, wherein:

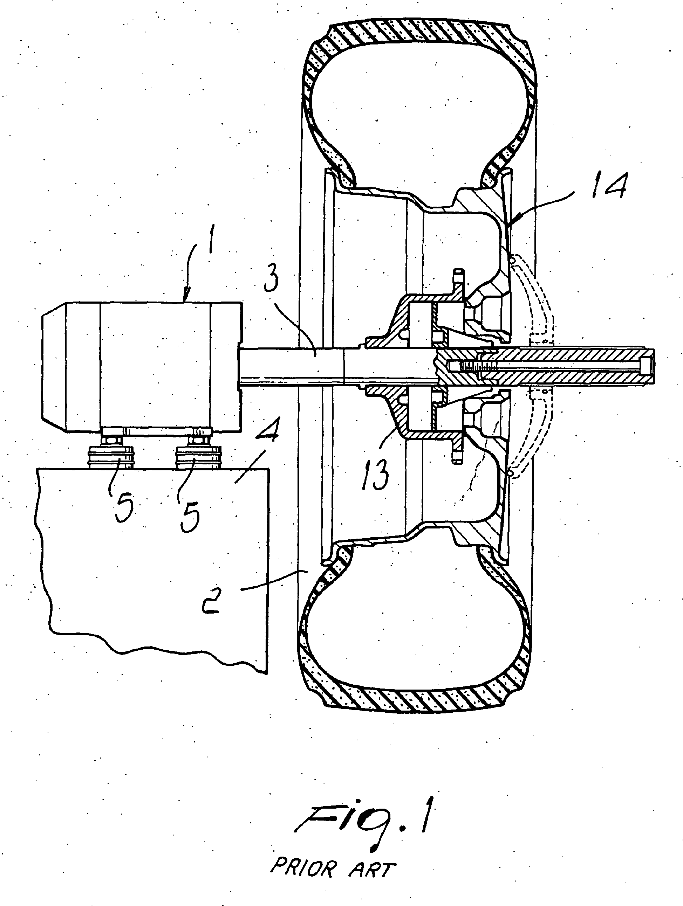

Figure 1 is a schematic partially sectional view of a balancing machine according to the prior art;
Figure 2 is an axial sectional view of a balancing machine according to the invention, with the stator of the motor connected to the support;
Figure 3 is a sectional view, taken along the line III-III of Figure 2;
Figure 4 is a sectional view, taken along the rotating shaft, of a balancing machine with the stator of the motor connected to the chassis;
Figure 5 is a sectional view, taken along the line V-V of Figure 4.

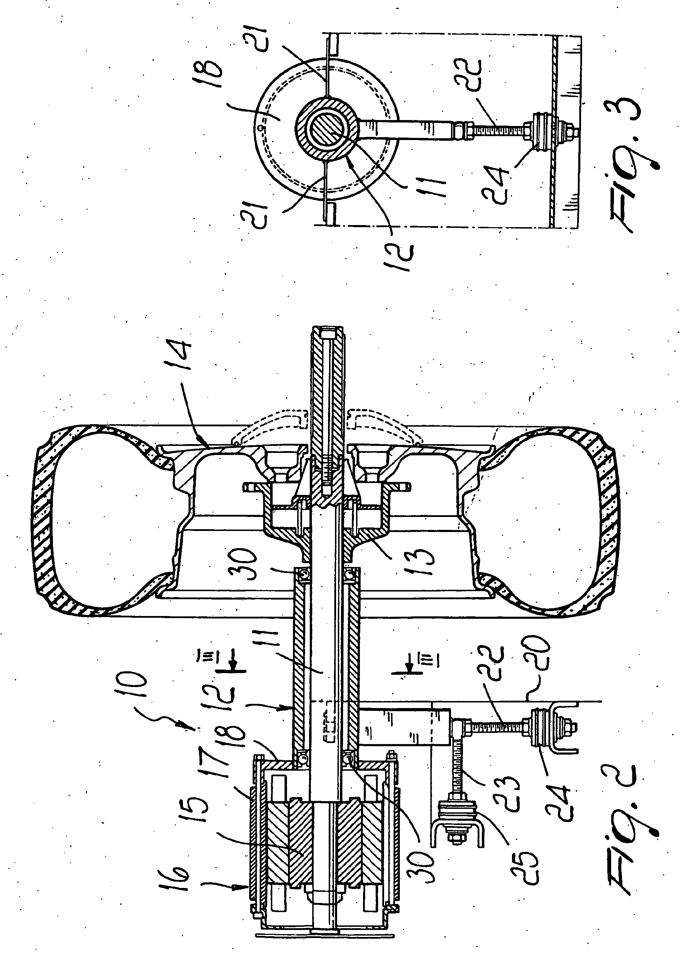

With reference to the figures and particularly to Figures 2 and 3, the balancing machine, generally designated by the reference numeral 10, comprises a rotating shaft 11, which is supported rotatably by a supporting element 12.

At one end, the rotating shaft 11 is provided with a flange 13 for the connection of the rotating body, generally designated by the reference numeral 14, which in the specific example is constituted by a motor vehicle wheel.

A rotor 15 of an electric motor, generally designated by the reference numeral 16, is keyed on the rotating shaft, on the opposite side of the flange 13 with respect to the supporting element 12.

The supporting element 12 is connected to a structure or chassis 20 of the balancing machine by means of a pair of laminas 21 and by means of two tension members 22 and 23, which are connected at 90° to each other and are provided with the respective ends of measurement transducers, designated by the reference numerals 24 and 25.

An important particularity of the invention consists in that the stator 17 of the electric motor is monolithically associated, by means of a flange 18, with the supporting element 12, so that the electric motor 16 is substantially mounted in a cantilevered fashion with respect to bearings 30, which are located at the ends of the supporting element and connect the rotating shaft 11.

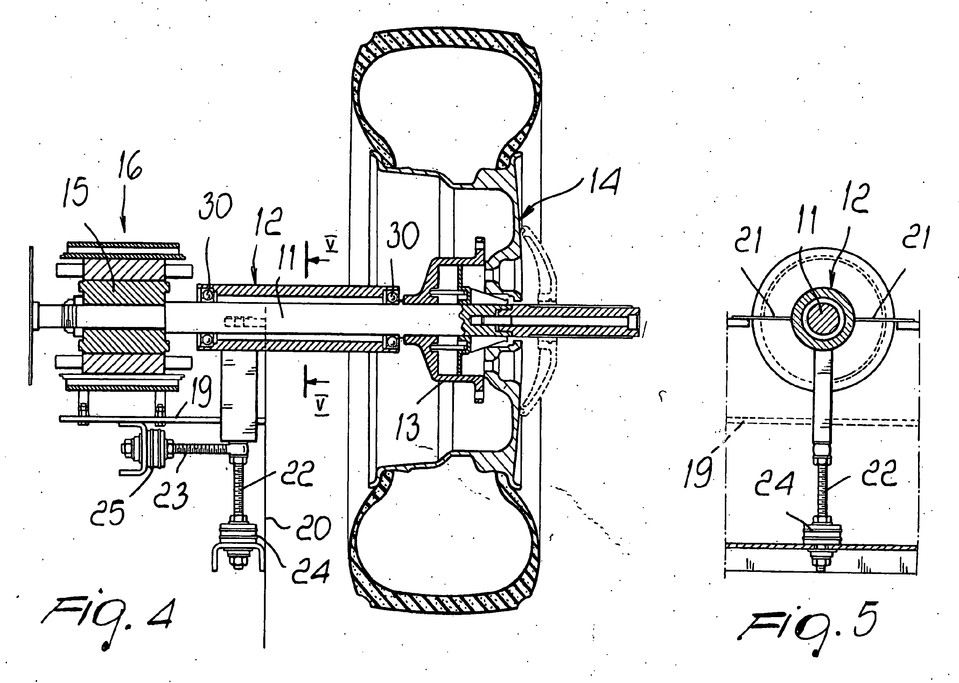

With specific reference to Figures 4 and 5, a second embodiment of the balancing machine is described in which the same components are designated by the same reference numeral.

In practice, one constructive difference is the fact that the stator 17 is not monolithically connected to the supporting element 2 but is fixed by means of a connecting element 19 directly to the chassis 20.

This embodiment allows physical separation between the stator 17 and the supporting element connected to the transducers, with an additional benefit as regards the transmission of heat to the structure or chassis 20.

The solutions described above have the advantage of not having a belt drive, with the typical noise picked up by the transducers, which detect equally the signal that originates from the imbalance and the signal generated by the driving belt.

Moreover, the effects due to the heating of the electric motor are eliminated completely because the motor is external with respect to the bearings and the transducers are in such a position that they undergo no variation in load or transverse forces due to thermal expansion.

Furthermore, the provision of the balancing machine with the rotor arranged externally with respect to the bearings allows to have a response that is always constant, avoiding the need for frequent recalibrations of the system.

From the above description it is thus evident that the invention achieves the proposed aim and objects, and in particular the fact is stressed that a balancing machine is provided which, in addition to being structurally very simple, is capable of providing optimum and consistent operation.

The invention thus conceived is susceptible of numerous modifications and variations, all of which are within the scope of the appended claims.

All the details may further be replaced with other technically equivalent elements.

In practice, the materials used, so long as they are compatible with the specific use, as well as the contingent shapes and dimensions, may be any according to requirements.

The disclosures in Italian Patent Application NO. MI2002A001027 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A balancing machine (10) for rotating bodies (14) in general and for motor vehicle wheels in particular, comprising a rotating shaft (11) supported rotatably by a supporting element (12) that is connected to a structure (20) of the balancing machine by means of laminas (21) and two tension members. (22,23) which are substantially perpendicular to each other, at an end whereof measurement transducers (24,25) are arranged, an electric motor (16) having a stator (17) and a rotor (15) being further provided for the actuation of said rotating shaft (11); the rotor (15) of said motor being keyed on said rotating shaft, comprising bearings (30) for supporting said rotating shaft which are arranged at said supporting element and are eternal with respect to said rotor, **characterized in that** the stator (17) of said electric motor is monolithically connected to said supporting element (12).

2. The balancing machine according to claim 1, **characterized in that** said supporting laminas (21) of said supporting element (12) are arranged mutually opposite with respect to said supporting element (12).

3. The balancing machine according to claim 1, **characterized in that** it comprises a flanges (18) for the monolithic connection of said stator (17) to said supporting element (12).

4. The balancing machine according to claim 1, **characterized in that** it comprises a flange (13) for connecting the rotating body (14), said flange being arranged on the opposite side of said electric motor (16) with respect to said supporting element (12).

5. A balancing machine (10) for rotating bodies (14) in general and for motor vehicle wheels in particular, comprising a rotating shaft (11) supported rotatably by a supporting element (12) that is connected to a structure (20) of the balancing machine by means of laminas (21) and two tension members (22,23) which are substantially perpendicular to each other, at an end whereof measurement transducers (24,25) are arranged, an electric motor (16) having a stator (17) and a rotor (15) being further provided for the actuation of said rotating shaft (11), the rotor (15) of said motor being keyed on said rotating shaft, comprising bearings (30) for supporting said rotating shaft which are arranged at said supporting element and are external with respect to said rotor, **characterized in that** the stator of said electric motor is monolithically connected to said structure (20) of the machine.

6. The balancing machine according to claim 5, **characterized in that** said supporting laminas (21) of said supporting element (12) are arranged mutually opposite with respect to said supporting element (12).

7. The balancing machine according to claim 5, **characterized in that** it comprises a connecting element (19) for connecting said stator (17) to said structure (20) of the machine.

8. The balancing machine according to claim 5, **characterized in that** it comprises a flange (13) for connecting the rotating body (14), said flange being arranged on the opposite side of said electric motor (16) with respect to said supporting element (12).

## Patentansprüche

1. Auswuchtmaschine (10) für rotierende Körper (14) im Allgemeinen und für Räder von Motorfahrzeugen im Speziellen, mit einer rotierenden Welle (11), die drehbar von einem Trägerelement (12) getragen ist, das mit einer Struktur (20) der Auswuchtmaschine mittels Blättchen (21) verbunden ist und mit zwei Spanngliedern (22, 23), die im Wesentlichen senkrecht zueinander sind, wobei an deren einem Ende Messwertgeber (24, 25) angeordnet sind, weiterhin ein elektrischer Motor (16) mit einem Stator (17) und einem Rotor (15) vorgesehen ist, zum Antreiben der rotierenden Welle (11), der Rotor (15) des Motors auf der rotierenden Welle verkeilt ist, mit Lagern (30) zum Lagern der rotierenden Welle, die am Trägerelement angeordnet und extern bezüglich des Rotors sind, **dadurch gekennzeichnet, dass** der Stator (17) des elektrischen Motors monolithisch mit dem Trägerelement (12) verbunden ist.

2. Auswuchtmaschine nach Anspruch 1, **dadurch gekennzeichnet, dass** die tragenden Blättchen (21) des Trägerelements (12) bezüglich des Trägerelements (12) gegenseitig entgegengesetzt angeordnet sind.

3. Auswuchtmaschine nach Anspruch 1, **dadurch gekennzeichnet, dass** sie einen Flansch (18) für die monolithische Verbindung des Stators (17) mit dem Trägerelement (12) aufweist.

4. Auswuchtmaschine nach Anspruch 1, **dadurch gekennzeichnet, dass** sie einen Flansch (13) zum Verbinden des rotierenden Körpers (14) aufweist, wobei der Flansch auf der gegenüberliegenden Seite des elektrischen Motors (16) bezüglich des Trägerelements (12) angeordnet ist.

5. Auswuchtmaschine (10) für rotierende Körper (14) im Allgemeinen und für Räder von Motorfahrzeugen im Speziellen, mit einer rotierenden Welle (11), die drehbar von einem Trägerelement (12) getragen ist, das mit einer Struktur (20) der Auswuchtmaschine mittels Blättchen (21) verbunden ist und mit zwei Spanngliedern (22, 23), die im Wesentlichen senkrecht zueinander sind, wobei an deren einem Ende Messwertgeber (24, 25) angeordnet sind, weiterhin ein elektrischer Motor (16) mit einem Stator (17) und einem Rotor (15) vorgesehen ist, zum Antreiben der rotierenden Welle (11), der Rotor (15) des Motors auf der rotierenden Welle verkeilt ist, mit Lagern (30) zum Lagern der rotierenden Welle, die am Trägerelement angeordnet und extern bezüglich des Rotors sind, **dadurch gekennzeichnet, dass** der Stator des elektrischen Motors monolithisch mit der Struktur (20) der Maschine verbunden ist.

6. Auswuchtmaschine nach Anspruch 5, **dadurch gekennzeichnet, dass** besagte tragende Blättchen (21) des Trägerelements (12) gegenseitig entgegengesetzt zum Trägerelement (12) angebracht sind.

7. Auswuchtmaschine nach Anspruch 5, **dadurch gekennzeichnet, dass** sie ein Verbindungselement (19) zum Verbinden des Stators (17) mit der Struktur (20) der Maschine aufweist.

8. Auswuchtmaschine nach Anspruch 5, **dadurch gekennzeichnet, dass** sie einen Flansch (13) zum Verbinden des rotierenden Körpers (14) aufweist, wobei der Flansch auf der gegenüberliegenden Seite des elektrischen Motors (16) bezüglich des Trägerelements (12) angeordnet ist.

## Revendications

1. Une machine à équilibrer (10) pour des corps rotatifs (14) en général et pour des roues de véhicule motorisé en particulier, comprenant un arbre (11) rotatif porté de manière libre en rotation par un élément de support (12) qui est connecté à une structure (20) de la machine à équilibrer au moyen de lames (21) et de deux éléments de tension (22, 23) qui sont sensiblement perpendiculaires l'un à l'autre, à une extrémité desquels sont disposés des transducteurs (24, 25) de mesure, un moteur électrique (16) ayant un stator (17) et un rotor (15) étant de plus prévu pour l'actionnement dudit arbre (11) rotatif, le rotor (15) dudit moteur étant calé sur ledit arbre rotatif comprenant des paliers (30) pour porter ledit arbre rotatif, qui sont disposés sur ledit élément de support et sont extérieurs par rapport audit rotor, **caractérisée en ce que** le stator (17) dudit moteur électrique est connecté audit élément de support (12) de façon monolithique.

2. La machine à équilibrer selon la revendication 1, **caractérisée en ce que** lesdites lames (21) de support dudit élément de support (12) sont disposées de façon mutuellement opposée par rapport audit élément de support (12).

3. La, machine à équilibrer selon la revendication 1, **caractérisée en ce qu'**elle comprend un flanc (18) pour la connexion monolithique dudit stator (17) audit élément de support (12).

4. La machine à équilibrer selon la revendication 1, **caractérisée en ce qu'**elle comprend un flanc (13) pour la connexion du corps rotatif (14), ledit flanc étant disposé sur le côté opposé dudit moteur électrique (16) par rapport audit élément de support (12).

5. Une machine à équilibrer (10) pour des corps rotatifs (14) en général et pour des roues de véhicule motorisé en particulier, comprenant un arbre (11) rotatif porté de manière libre en rotation par un élément de support (12) qui est connecté à une structure (20) de la machine à équilibrer au moyen de lames (21) et de deux éléments de tension (22, 23) qui sont sensiblement perpendiculaires l'un à l'autre, à une extrémité desquels sont disposés des transducteurs (24, 25) de mesure, un moteur électrique (16) ayant un stator (17) et un rotor (15) étant de plus prévu pour l'actionnement dudit arbre (11) rotatif, le rotor (15) dudit moteur étant calé sur ledit arbre rotatif comprenant des paliers (30) pour porter ledit arbre rotatif qui sont disposés sur ledit élément de support et sont extérieurs par rapport audit rotor, **caractérisée en ce que** le stator dudit moteur électrique est connecté à ladite structure (20) de la machine de façon monolithique.

6. La machine à équilibrer selon la revendication 5, **caractérisée en ce que** lesdites lames (21) de support dudit élément de support (12) sont disposées de façon mutuellement opposée par rapport audit élément de support (12).

7. La machine à équilibrer selon la revendication 5, **caractérisée en ce qu'**elle comprend un élément de connexion (19) pour la connexion dudit stator (17) à ladite structure (20) de la machine.

8. La machine à équilibrer selon la revendication 5, **caractérisée en ce qu'**elle comprend un flanc (13) pour la connexion du corps rotatif (14), ledit flanc étant disposé sur le côté opposé dudit moteur électrique (16) par rapport audit élément de support (12).
